# EUROPEAN PATENT SPECIFICATION

(11) **EP 2 798 026 B1**
(45) Date of publication and mention of the grant of the patent: **03.08.2016**
(21) Application number: 12809965.2
(22) Date of filing: 17.12.2012
(51) Int. Cl.: C09J 7/02, C09J 7/04, B32B 27/18, C08K 7/00

(54) **SOLUTION ACTIVATABLE MULTI-LAYER ADHESIVE COMPOSITIONS FOR LINER-FREE LABELS AND METHODS OF ACTIVATION THEREOF**
LÖSUNGAKTIVIERBARE MEHRSCHICHTIGE KLEBSTOFFZUSAMMENSETZUNGEN FÜR TRÄGERBANDLOSE ETIKETTEN UND AKTIVIERUNGSVERFAHREN DAFÜR
COMPOSITIONS ADHÉSIVES MULTI-COUCHES ACTIVABLES PAR UNE SOLUTION POUR DES ÉTIQUETTES SANS DOUBLURE ET LEURS PROCÉDÉS D'ACTIVATION

(30) Priority: 29.12.2011 US 201113339898
(43) Date of publication of application: 05.11.2014
(73) Proprietor: NuLabel Technologies, Inc., East Providence, RI 02914 (US)
(72) Inventor: CHO, Daniel, Youngwhan, Pawtucket, RI 02860 (US); LUX, Benjamin, David, Providence, RI 02909 (US); MUNNELLY, Heidi, N., Cumberland, RI 02864 (US); SO, Philip, Franklin, MA 02038 (US); TABIS, Kathleen, A., Coventry, RI 02816 (US); SONSHINE, David, A., Stamford, CT 06903 (US)
(74) Representative: Potter Clarkson LLP
(86) International application number: PCT/US2012/070134
(87) International publication number: WO 2013/101523

(56) References cited:
- US-A- 3 296 723
- US-A- 3 351 515

## Description

### FIELD OF THE INVENTION

This invention is in the field of fluid activatable adhesive compositions for use in liner-free labels, particularly multilayer adhesive compositions, and methods of making and using thereof.

### BACKGROUND OF THE INVENTION

Label printing and/or labeling typically consists of label media containing an adhesive composition layer that is constantly and consistently tacky. Many of these label media are formed with a removable non-stick layer, containing a release coat and a release liner, over the adhesive composition layer, to prevent the adhesive composition layer from coming into contact with internal components of a label printer, applicator, or labeler and/or the printable layer of an adhesive sheet when an adhesive sheet is wound in a form such as a roll. In some instances, the liner layer is disposed of after printing or at the time the label is applied to an article, either manually or by an autonomous process designed for the removal purpose. These disposable liner layers create waste disposal issues.

Numerous attempts have been made to use conventional polymeric adhesive compositions with tacky or pressure-sensitive adhesives (PSA) in liner-free label constructions where a non-stick or release layer is coated onto the opposite side of the adhesive label. However, these systems are not compatible in conventional labeling equipment, requiring special liner-free label printers and application systems. In addition, the non-stick top-coating greatly reduces the printability of the label. The PSA causes machine problems by gumming up label application systems and creates cleanup issues.

Other attempts have been made to make a dry-gum or water or solvent or co-solvent remoistenable adhesive label. These are typically based on both carbohydrate and synthetic polymeric adhesives. These adhesives have little utility on many synthetic and non-porous substrates as they do not form substantial adhesive or mechanical bonds to the substrate. The labels are prone to "swimming" or moving from the desired application area during down-stream processing due to a lack in rapid bond formation. As such, these attempts have had little success.

U.S. Patent No. 3,351,515 and U.S. Patent No. 3,296,723 relate to adhesive labels.

Certain liner-free labels have been developed having a printed layer, a sheet, and an adhesive composition layer that can be made tacky by an activator prior to or after printing/applying an image. However, many of these embodiments still require a non-stick coating to avoid the gumming problem discussed above, such as described in U.S. Patent No. 6,298,894 by Nagamoto et al. which disclose the use of silicone oil as a non-stick coating.

Many of the activatable adhesive liner- free labels described in the literature are water activated and/or solvent activated. U.S. Patent No. 6,656,319 describes adhesive compositions having a film thickness of at least 25 microns. However, the compositions described therein cannot adhere to a wide variety of substrates from smooth, low surface energy substrates, such as polyethylene (PE) to rough fibrous substrates, such as paper and cardboard. Moreover, these labels lack both strong adhesion on polymeric substrates and quick tack to polymeric substrates and are prone to "swimming" as discussed above.

Furthermore, such liner-free labels are typically stored in coils or foldable stacks, particularly for large numbers of labels. Under conditions experienced in storage, e.g., high temperature and/or high relative humidity, the adhesive layer on one label can interact with the face of an adjacent label. This can cause sticking when the labels are uncoiled or unfolded, and in some cases may cause damage to the adhesive layer and/or the label face.

There exists a need for a barrier composition which can prevent interaction between the adhesive layer on one label and the label face of an adjacent label without compromising the adhesive strength of the adhesive layer.

Therefore, it is an object of the invention to provide multilayer adhesive compositions containing an adhesive layer and a barrier layer, wherein the barrier layer does not compromise the adhesive strength of the adhesive layer, and methods of making and using thereof.

### SUMMARY OF THE INVENTION

The invention is as defined in the accompanying claims.

The fluid-activatable liner-free label of the invention comprises a label substrate, an adhesive layer and a barrier layer, wherein the adhesive layer is on top of the label substrate and the barrier layer is on top of the adhesive layer.

Fluid activatable, multilayer adhesive compositions for use with liner-free labels, and methods of making and using thereof are described herein. The compositions contain a functional layer, such as an adhesive layer, which is applied to the label substrate and a barrier layer which is applied on top of the adhesive layer. The multilayer composition prevents the adhesive layer on the label substrate from interacting with the face of an adjacent label, particularly when the labels are stored as coils or folded stacks.

In some embodiments, the adhesive composition/layer contains at least two polymers with different hydrophilicities. The more hydrophilic polymer(s) may be referred to as "the hydrophilic polymer" and the less hydrophilic polymer(s) may be referred to as "the hydrophobic polymer". The hydrophilic and hydrophobic polymers are selected to allow the at least one hydrophilic polymer to have a characteristic of quick tack when exposed to a hydrophilic solvent, such as water or other aqueous solvent, while the at least one hydrophobic polymer has a characteristic which enables strong adhesion to a paper or polymeric substrate. Alternatively, hydrophilic and hydrophobic moieties can be incorporated in various ratios onto a single polymer backbone yielding a dual functional copolymer.

The adhesive composition may contain hygroscopic particulate fillers which enable fast exhaustion of the activation fluid out of the adhesive when applied to a substrate, thereby allowing the hydrophobic polymers of the adhesive composition to achieve strong adhesion of the liner-free label to the paper or polymeric substrate. The particulate fillers may also provide fast absorption of the activation fluid composition into the full thickness of the adhesive composition and rapid swelling of not only the hydrophilic part, but also the hydrophobic part, of the adhesive composition. The particulate fillers may also function as anti-blocking agents when liner-free label media are tightly wound in a roll.

In some embodiments, the barrier layer contains one or more non-tacky, film-forming resins and optionally discrete particles containing one or more hydrophobic materials. If the barrier composition/layer contains only the film-forming resin(s), the composition/layer is generally homogeneous or one continuous phase. If the barrier composition/layer contains discrete particles, the composition/layer is generally heterogeneous or two distinct phases.

The compositions described herein can quickly go from a non-tacky to a tacky state enabling the use of water-activated and/or solvent-activated liner-free labels for label printing and labeling that require both quick tack and strong adhesion. In general the tacky characteristics are drawn from the immediate swelling of the hydrophilic polymers. These in turn swell the entire polymer layer allowing both the hydrophobic and hydrophilic components to wet onto the desired substrate forming an adhesive bond.

The multilayer adhesive compositions described herein may be used on paper polymers commonly used in commercial applications including, but not limited to, polyethylene terephthalate (PETE, PET, PETG), polyethylene (PE), polystyrene (PS), low- density polyethylene (LDPE), linear low-density polyethylene (LLDPE), high density polyethylene (HDPE), polypropylene (PP).

### DETAILED DESCRIPTION OF THE INVENTION

### I. Definitions

"Hydrophilic polymer", as used herein, refers to one or more polymers in the adhesive composition having a greater affinity for water than one or more other polymers in the adhesive composition. Hydrophilicity can be quantified by measuring its partition coefficient between water (or a buffered aqueous solution) and a water-immiscible organic solvent, such as octanol, ethyl acetate, methylene chloride, or methyl *tert-*butyl ether. If after equilibration a greater concentration of the compound is attained in water than in the organic solvent, then the compound is considered hydrophilic.

"Hydrophobic polymer", as used herein, refers to one or more polymers in the adhesive composition having less affinity for water than one or more other polymers in the adhesive composition. Hydrophobicity can be quantified by measuring its partition coefficient between water (or a buffered aqueous solution) and a water-immiscible organic solvent, such as octanol, ethyl acetate, methylene chloride, or methyl *tert-butyl* ether. If after equilibration a greater concentration of the compound is attained in the organic solvent than in water, then the compound is considered hydrophobic.

"Tack" or "quick tack", as used herein, refers to instantaneous or nearly instantaneous formation of a bond between an adhesive and surface when brought into light contact for a very short period, e.g., less than five second. Tack properties are dependant, at least in part, on the viscoelastic flow characteristics of the polymer adhesive system. In a system where a volatile solvent-based activation method is being employed, it is possible for the system to possess initial tack when the adhesive is in a moist state and no tack (but still be well adhered to a substrate through adhesive bonding) once the moisture has evaporated or been removed. Tack is particularly relevant where bonds must immediately sustain forces after assembly. Tack forces are particularly significant in maintaining bond strength to low surface energy substrates when chemical or mechanic bonding processes do not readily occur. Tack measurement methods are typically application specific, however the Standard Test Method for Tack of Pressure-Sensitive Adhesives by Rolling Ball (D3121 - 06) as developed by the American Society for Testing and Materials (ASTM) provides a reliable measurement method. In this method a ball of a fixed size is rolled down a ramp of a fixed height and propelled onto a tacky label. The distance the ball travels across the label provides a measure of tack. "No tack" or "non-tacky" means that there is no such instant contact bond or adhesion between the adhesive and the substrate.

"Blocking" refers to the formation of a chemical bond or physical interaction between the adhesive layer of the label and the top of the label when the label is in roll or stacked form.

"Adhesion" or "adhesive bonding", as used herein, refers to the longer term bond between the adhesive and the substrate and/or another adhesive. Adhesion, unlike tack, focuses on the bond created between a surface and a substrate (which can also be another adhesive) that is not dependent upon the viscoelastic flow characteristics of the adhesive.

Good adhesive tack (the combination between adhesion and tack) is achieved when the adhesive strength is greater than the cohesive strength of the adhesive system. A bond of adequate strength can be formed and maintained using adhesive forces, tack forces, or a combination of the two; however, bond formation is not limited by these forces. Peel strength is a force measure of both tack and adhesive forces. ASTM Standard D3330 (Standard Test Method for Peel Adhesion of Pressure-Sensitive Tape) provides an accurate measure of peel strength. For a particular substrate, average peel test values generally range from 100 grams/inch to 1,000 grams/inch, preferably from 200 grams/inch to 1,000 grams/inch, more preferably 400 grams/inch to 1,000 grams/inch to achieve adequate adhesion.

"Open time" as used herein, refers to the amount of time between the activation of the adhesive and the application of the label to a substrate.

"Film-forming resin", as used herein, generally refers to resins or polymers, that when applied as a liquid to a solid label substrate, cure or dry to form a continuous, solid coating. The dry film generally has a thickness in the range of 0.5 µm to 50 µm.

"Mean particle size" as used herein, generally refers to the statistical mean particle size (diameter) of the particles in a population of particles. The diameter of an essentially spherical particle may refer to the physical or hydrodynamic diameter. The diameter of a non-spherical particle may refer preferentially to the hydrodynamic diameter. As used herein, the diameter of a non-spherical particle may refer to the largest linear distance between two points on the surface of the particle. Mean particle size can be measured using methods known in the art, such as dynamic light scattering.

"Nanoparticle", as used herein, generally refers to a particle having a diameter from 10 nm up to but not including 1 micron, preferably from 100 nm to 1 micron. The particles can have any shape. Nanoparticles having a spherical shape are generally referred to as "nanospheres".

"Microparticle", as used herein, generally refers to a particle having a diameter from 1 micron to 100 microns, preferably from 1 micron to 25 microns. The microparticles can have any shape. Microparticles having a spherical shape are generally referred to as "microspheres".

### II. Functional composition/layer

The multilayer compositions described herein contain a functional layer, such as an adhesive layer, which provides a desired function or activity of the composition. In particular embodiments, the functional layer provides adhesion of the liner-free label to a substrate.

The adhesive compositions described herein contain one or more adhesive materials. In one embodiment, the adhesive composition contains a mixture of one or more hydrophilic materials and one or more hydrophobic materials. In one embodiment, the hydrophilic and/or hydrophobic materials are polymeric materials. Each polymer may represent a single polymer or a blend of two or more different polymers. In another embodiment, the adhesive composition contains one or more polymers of each which contains hydrophilic regions and hydrophobic regions. The compositions described herein allow for rapid water penetration into the hydrophilic material(s) and swelling of the hydrophilic adhesive components for the generation of quick tack followed by the redistribution of the activating solution into the hydrophobic material(s) for longer term adhesion.

Hygroscopic particulate fillers can be incorporated into the adhesive composition for the generation of both quick tack and longer term adhesion upon activation by an aqueous or solvent-based solution for adhesion to a variety of substrates, such as paper, cardboard, metal, as well as glass and plastics (i.e., low energy and thermoplastic substrates).

Hygroscopic agents (e.g., particulate fillers) in the adhesive formulations can modulate the kinetics of water distribution throughout the hydrophilic and hydrophobic components of the adhesion composition to achieve the desired adhesive behavior and performance of the liner-free label. Kinetics may also be modified by the degree hydrophilicity and hydrophobicity of the polymers in the adhesive layer.

### A. Hydrophilic materials

The hydrophilic materials, e.g. polymeric materials, in the adhesive compositions described herein provide quick tack, i.e., the initial adhesive force responsible for keeping the label adhered to the substrate, for the adhesive compositions. The speed or quickness of activation of the hydrophilic material(s) are such that it enables the adhesive, upon application of an activating fluid, to not move (or swim) (or minimize such) once applied to the desired application area of a substrate. This is of particular utility in high throughput label operations where swimming could result in a misplaced label. The polymer component(s) are obtained either as aqueous solutions, emulsions, suspensions, or solids, which are diluted or dissolved to the desired concentration for incorporation into the adhesive composition.

Suitable materials include, but are not limited to, polyvinyl alcohols, polyvinyl acetates, polyvinylpyrrolidones, polyvinylpyrrolidone-vinyl acetate copolymers, polyacrylic acids, polyethylene glycols, poly(2-ethyl-2-oxazoline), polyacrylamide copolymers, ethylene vinyl acetates, cellulose derivatives, particularly alkyl cellulose derivatives (such as cellulose acetate, methyl cellulose, ethyl/hydroxyethyl and hydroxymethylpropyl cellulose), ureas, gelatins, alginates, agars, gum arabics, and other similar materials as well as combinations of the above materials. Other material(s) having the desired short-term adherence characteristic may also be used. Solutions of the hydrophilic polymer described herein generally have a pH of 5.0 or greater, preferably 6.0 or greater, more preferably 7.0 or greater, reflecting an acid number of less than 50, 40, 30, 25, 20, 15, or 10.

In one embodiment, the hydrophilic polymer is a poly(2-ethyl-2-oxazoline), such as those available under the tradename Aquazol (e.g., Aquazol 200 (mol. wt. 200,000) or Aquazol 500 (mol. wt. 500,000)), vinyl pyrrolidone/vinyl acetate copolymers, such as PVP/VA E-735 (available from Ashland Chemical Co.), and combinations thereof or CELVOL® 502, a partially hydrolyzed (87-89%) polyvinyl alcohol available from Celanese (Dallas, TX). The polymers may be available in solid form, such as dry powders or in solution, such as in ethanol, isopropanol, or water.

The hydrophilic polymers are typically present in an amount from 10% to 50% by dry weight of the adhesive film, preferably from 20% to 40% by dry weight of the adhesive film.

### B. Hydrophobic polymers

The hydrophobic adhesive material or materials are typically polymeric materials providing long-term tack (or adhesion) upon activation by an aqueous or solvent-based solution for adhesion to a substrate. These hydrophobic material(s) have the characteristic of being slower wetting than the hydrophilic material(s) described above and of providing long-term adhesion of the label to the substrate, especially to a hydrophobic or nonpolar surface. The build up to such long-term adhesion may start while the initial adhesive force provided by the hydrophilic adhesive material(s) is also present due to the response to fluid activation. Upon removal or drying of the fluid and long after the hydrophilic adhesive material(s) lose all or some of their adhesive nature, the hydrophobic adhesive material(s) are responsible for the long term adhesion of the label facestock (*i.e.* label substrate) to the desired substrate.

Due to their hydrophobic nature, most of these polymer adhesive material(s) are available as stabilized emulsions, dispersions, and/or suspensions containing the polymer, surfactants/emulsifiers, stabilizers and other additives. In a preferred embodiment, the desired overall concentration of the coating solution is 30% to 60% solids (weight-to-volume). This provides a sufficiently high amount of solids without increasing the viscosity beyond the acceptable range for many of the desired coating methods. Care must be taken with the pH of these emulsions to prevent destabilization or phase separation. The emulsions described herein generally have a pH of 5.0 or greater, preferably 6.0 or greater, more preferably 7.0 or greater, reflecting an acid number of the polymer of less than 50, 40, 30, 25, 20, 15, or 10.

The hydrophobic polymers are typically present in an amount from 20% to 80% by dry weight of the adhesive, preferably from 40% to 80% by dry weight of the adhesive, and most preferably from 50% to 75% by dry weight of the adhesive.

Suitable hydrophobic materials include, but are not limited to, natural and reclaimed rubbers, polyurethanes, non-carboxylated and carboxylated styrene-butadiene rubbers, polyacrylates based on the polymerization of monomers of methacrylates, methyl acrylate, ethyl acrylate, 2-chloroethyl vinyl ether, 2-ethylhexyl acrylate, hydroxyethyl methacrylate, butyl acrylate, butyl methacrylate or combinations of the previous, polyamides, polyesters, polyolefins, polyolefins containing maleic anhydride, polystyrenes, polyvinyl esters, polyvinyl ketones, polydiene elestomers, polyiso butylenes, poly butadienes, polychloroprenes, poly styrene acrylics, carboxylated acrylic, styrene and/or butadiene polymers, as well as combinations of the above materials. Other material(s) having the desired long-term adherence characteristic may also be used.

In one embodiment, the hydrophobic polymer(s) is a carboxylated styrene/butadiene copolymer, such as those available under the tradename Styranol® (e.g., Styranol® ND 430) available from BASF or Rovene®, such as Rovene® 4049. In other embodiments, the hydrophobic polymer is a latex styrene acrylate, such as those available under the tradename Acronal®, such as Acronal® A220 or Acronal® 296D. Styranol is available as an aqueous dispersion. In a particular embodiment, the hydrophilic polymer is a poly(2-ethyl-2-oxazoline), such as those available under the tradename Aquazol (e.g., Aquazol 200 (mol. wt. 200,000) or Aquazol 500 (mol. wt. 500,000)), vinyl pyrrolidone/vinyl acetate copolymers, such as PVP/VA E-735 (available from Ashland Chemical Co.), and combinations thereof and the hydrophobic polymer is a carboxylated styrene/butadiene copolymer, such as those available under the tradename Styranol (e.g., Styranol ND 430).

In another embodiment, the hydrophobic polymer includes JONCRYL® 2641, a styrene acrylic emulsion supplied at 38.5%wt solids in water available from BASF (Wyandotte, MI); JONCRYL® 2646, an acrylic emulsion supplied at 48.5%wt solids in water available from BASF (Sturtevant, WI); JONCRYL® 624, an acrylic emulsion supplied at 48%wt solids in water available from BASF (Wyandotte, MI); JONCRYL® 2330, an acrylic emulsion supplied at 45.5%wt solids in water available from BASF (Wyandotte, MI); JONCRYL® ECO 2124, an acrylic emulsion supplied at 47.3%wt solids in water available from BASF (Sturtevant, WI); UCAR® Latex 6569, an acrylic copolymer emulsion supplied at 57.5%wt solids in water available from Arkema (Cary, NC); VINNAPASS® 401, a poly(vinyl alcohol) stabilized vinyl acetate-ethylene copolymer dispersion supplied at 55%wt solids in water available from Wacker Chemie (Munchen, Germany); AUROREN® AE-202, a waterborne acrylic modified polyolefin supplied at 30%wt solids in water available from Nippon Paper Chemicals (Tokyo, Japan); ROVENE® 4813 SBR Emulsion, a high gel content polymerized latex with 30% bound styrene content supplied at 53%wt solids in water available from Mallard Creek Polymers (Charlotte, NC); DISPERCOLL® C VPLS 2372/1, an aqueous dispersion of poly-2-chlorobutadiene-1,3 supplied at 58%wt solids in water available from Bayer Material Sciences (Pittsburgh, PA); SNOWTACK® SE 780G, a waterborne tackifier dispersion based on rosin adduction and esterification supplied at 55%wt solids in water available from Lawter (Chicago, IL); SNOWTACK® 880G, a waterborne tackifier dispersion based on rosin and non-rosin resins supplied at 57%wt solids in water available from Lawter (Chicago, IL); SNOWTACK® SE 724G, a waterborne tackifier dispersion based on high-grade, stabilized rosin ester supplied at 51%wt solids in water available from Lawter (Chicago, IL); Michem Prime 5931, an ethylene acrylic acid dispersion supplied at 28%wt in water available from Michelman, Inc. (Cincinnati, OH); Bayhydrol AHXP2754, an aqueous styrene acrylate dispersion, available from Bayer Material Science; Acronal V210, a high solids, low viscosity acrylic copolymer emulsion available from BASF; and Adura 100, a waterborne polyol polyester supplied by Air Products and Chemicals, Inc. (Allentown, PA) at 70%wt solids in water.

### C. Polymers containing hydrophilic and hydrophobic regions

In some embodiments, the adhesive layer contains one or more polymers, each of which contains hydrophilic and hydrophobic regions to provide quick tack and long-term adhesion. Exemplary polymers include, but are not limited to, A-C 5120, ethylene and acrylic acid copolymer from Honeywell; A-C 575, ethylene and maleic anhydride copolymer from Honeywell; poly(vinyl alcohol-co-ethylene)ethylene available from Sigma-Aldrich.

In one embodiment, the polymer is a pressure sensitive acrylic, such as those available under the tradename UCAR, such as UCAR 9291 available from Arkema Emulsion Systems (Cary, NC).

### D. Hygroscopic particulate fillers

Hygroscopic particulate fillers can be added to the composition to enhance the adhesive performance of the hydrophobic and hydrophilic materials. The use of such hygroscopic agents is beneficial as a means to enhance the penetration of water into the adhesive layer on a label as well as to control the kinetics of adhesive activation based on the distribution and redistribution of the activation fluid (or solvent) into both the hydrophilic and hydrophobic regions of the adhesive. In order for the adhesives to transition from their non-tacky to tacky state, they require a certain amount of water and/or solvent moisture to be present within the material. The retention of this moisture can be utilized as a mechanism to preserve viscoelastic flow of the polymer layer and in turn create a tacky label. However, excessive moisture can prevent the contact of the adhesive with the substrate by acting as a physical barrier to the generation of adhesive interactions resulting in the migration of the label from the desired application area on a substrate during down-stream processing. An added benefit of the use of hygroscopic agents is their ability to reduce the phenomena of 'blocking' in self-wound rolls of labels having a surface coated with the adhesive composition described herein.

These hygroscopic particulate filler materials are typically available as colloidal suspensions in a variety of solvents or as solids and are incorporated into the final adhesive composition at the desired concentrations. Concentrations of the suspensions are typically in the range of 10% to 90% solids (weight of solids in the suspension to volume of liquid phase of suspension) in either an aqueous or solvent based suspension and present in the final dry film in a ratio from 1% to 25% (weight of dry solids in film as a ratio of other components dry weight in film). However, concentrations below or above this range are possible depending on the composition and/or the desired application.

Care should be taken to prevent the flocculation of these hygroscopic agents during adhesive preparation and storage since these agents are often micro- and nanoparticles, which are prone to aggregation due to their high surface area to volume ratios. Generally, particles within the particulate fillers may have the largest particle dimension between 0.005 µm (micrometers) and 15 µm, more preferably between 0.005 µm and 10 µm, and most preferably between 0.005 µm and 5 µm. As used herein, the term "largest particle dimension" refers to the longest linear dimension between two points on the particle.

Methods to ensure the homogenous distribution of these agents in suspension can include the use of agitation, surfactants, temperature and/or pH. The pre-saturation or treatment of the hygroscopic agents using solvents, water, and/or adhesive components is also possible to alter their affinity for different components of the activating solution.

Suitable hygroscopic particulate fillers include, but are not limited to, alumina, alumina gel, boehmite, pseudoboehmite, clay, calcium carbonate, chalk, magnesium carbonate, kaolin, calcined clay, pyropylate, bentonite, zeolite, talc, silica, silica gel, synthetic aluminum silicates, synthetic calcium silicates, diatomaceous earth, anhydrous silicic acid powder, aluminum hydroxide, barite, barium sulfate, gypsum, calcium sulfate, and organic particles, such as hydrophilic and/or hydrophobic polymeric beads including but not limited to polyamides, polyvinyl alcohol, polyvinylpyrrolidone, polyvinylpyrrolidone vinyl acetate and other similar materials as well as combinations of the above materials.

### D. Polymer solvents

Solvent(s) can be added to the composition as means for formulating the hydrophilic and/or hydrophobic materials. For example, solvent(s) can be added to mirror the composition of the activating fluid to enhance the rapid swelling of the label and quick tack adhesion forces following the exposure of the adhesive layer to the activating fluid. By including the chemistry of the activating solution during the deposition process, the surface of the adhesive can be modified to promote the penetration of the activating solution into the adhesive layer for activation. Furthermore, the incorporation of solvents, particularly those that are less viscous and/or have higher vapor pressures, allows for the deposition of more consistent and uniform adhesive films on the labels. Furthermore, some solvents may be able to prevent any adverse effects of the adhesive layer deposition process on the front side of the label, which must remain pristine for optimal label print quality. Care must be taken to ensure that the solvent selected does not damage or deform the label substrate being coated.

In one embodiment, thermally activated paper is coated with a water based solvent system as primary alcohol, glycols, and acetates tend to damage or activate the thermal ink. Solvents may include, but are not limited to, ethanol, isopropanol, *n*-propanol, methyl ethyl ketone, toluene, methylene chloride, and/or coalescing agents including polyethylene glycol, glycol ethers, and fatty alcohols.

### E. Other additives

Additives may be incorporated into the activating fluid, such as acids, bases, buffers, antimicrobial agents, stabilizers, emulsifiers, and/or defoaming agents, as needed for the particular application.

Other additives may be added into the compositions (e.g., adhesive composition, barrier composition, activating fluid, or combinations thereof) to modulate the performance of the liner-free labels. These additives may be selected for a variety of purposes, such as enhancing water penetration, reducing blocking, increasing quick tack and/or long-term adhesion as well as improving latency (the time between label activation and application). Potential classes of additives include, but are not limited to, colorants, both dye and pigment based, salts, sugars, other carbohydrates, polyelectrolytes, proteins, dry and liquid surfactants, resins, wetting agents, additive that provide desired lay flat properties of the labels, such as humectants, polyethylene glycol, and/or salts, other similar materials as well as combinations thereof. These additives can be incorporated into one or both of the polymer components, the polymer solvent, the activating fluid, or combinations thereof.

In particular, the use of non-volatile solvents, plasticizers, coalescents, oligomers, and/or polymers in the activation may extend the open time of a given adhesive composition. The additives in the activation spray should not clog the applicator used to apply the activation spray and should not require excessive cleanup.

### III. Barrier composition/layer

The barrier composition prevents interaction of the functional layer (i.e., adhesive layer) once it has been applied to a label substrate with the face of an adjacent label, particularly when the labels are stored in coils or stacks. In one embodiment, the barrier composition/layer is homogeneous and contains one or more non-tacky, film-forming resins. In another embodiment, the barrier composition/layer is heterogeneous and contains one or more non-tacky, film-forming resin and discrete particles containing one or more hydrophobic materials.

Once the functional layer is applied to the label substrate (e.g., thermal paper stock) and dried, the barrier composition/layer is applied on top of the adhesive layer. When the coated labels are stored in coils or folded stacks, the face of the label cannot come in direct contact with the adhesive layer due to the presence of the barrier layer. Upon activation of the adhesive layer on the unwound or unfolded label, the barrier layer plus adhesive layer becomes soft and tacky and ready for application to the desired substrate.

### A. Non-tacky, film-forming resins

The barrier composition contains one or more non-tacky, film-forming resins or polymers. The non-tacky, film-forming resin or polymer forms a continuous, solid dry film when applied to a solid label substrate. Non-tacky, film-forming resins or polymers do not form instant contact bonds or physical interactions between the film and other substrates including itself under temperature conditions from 0°C to 60°C. Suitable non-tacky, film-forming resins or polymers include, but are not limited to, polyvinyl alcohol, polyvinyl acetate, polystyrene acrylates, polyvinyl pyrrolidone, cellulose derivatives, and polyacrylic acids.

In one embodiment, the film-forming polymer is an alcohol soluble polyamide resin, such as those available under the trade name Uni-Rez, such as Uni-Rez 2215. In another embodiment, the film-forming polymer is a polyvinyl alcohol, such as those available under the tradename Celvol, such as Celvol 502. In still other embodiments, the film-forming polymer is an acrylic polymer emulsion, such as those available under the tradename Joncryl, such as Joncryl ECO 2124.

The film-forming resin is generally present in an amount from 5% to 30% wt. solids in the dry film, preferably from 5% to 20% wt. solids in the dry film.

### B. Discrete particles containing a hydrophobic material

In some embodiment, the barrier composition/layer contains a non-tacky, film-forming resin in combination with discrete particles containing a hydrophobic material. In these embodiments, the barrier composition/layer is heterogeneous, wherein the discrete particles are dispersed through out the film-forming resin. The particles are preferable microparticles or nanoparticles. In one embodiment, the particles have a mean diameter from 10 nm to 50 µm, preferably from 1 µm to 25 µm, as measured by laser diffraction, dynamic light scattering or sieving methods. The particles can be spherical or irregularly shaped. It is believed that the particles described herein are supported by the non-tacking film-forming resin much like bricks in mortar. In contrast, the particles in U.S. Patent No. 6,656,319 are described as floating on, or protruding from, the surface of the adhesive layer. The compositions in the '319 patent do not contain a non-tacky, film-forming resin.

Exemplary hydrophobic material include, but are not limited to, polystyrene, polymethylmethacrylate, polyamide, polyethylene, polytetrafluoroethylene, perfluoroalkoxy polymers, fluorinated ethylene propylene polymers, polyamide, colloidal silica and combinations thereof. The hydrophobic material used to form the particles preferably has a glass transition temperature greater than 90°C.

The concentration of the discrete particles is from 35% to about 100% wt. solids, preferably from 40% to 60% weight solids in the dry film.

### C. Solvents

Solvent(s) can be added to the composition as means for formulating the materials (e.g., film-forming material and/or discrete particles) in the barrier composition. For example, solvent(s) can be added to mirror the composition of the solution of the activating fluid to enhance the rapid swelling of the label and quick tack adhesion forces following the exposure of the adhesive layer to the activating fluid and/or the solvent used to formulate the polymeric materials in the adhesive composition. The incorporation of solvents, particularly those that are less viscous and/or have higher vapor pressures, allows for the deposition of more consistent and uniform barrier layers on the labels. Care must be taken to ensure that the solvent selected does not damage or deform the label substrate being coated and/or the adhesive layer. Solvents which can be used to formulate the materials in the barrier composition are typically polar solvents, such as ketones, acetates, alcohols, and glycol ethers. Preferably, the solvents are blends of short chain alcohols (i.e. having 1 to 6 carbons) and water. Most preferably, the solvent is water.

### IV. Activating fluids

The activating fluid composition provides optimal activation of the adhesive component(s) of the layer of adhesive composition of the liner-free label. The activating fluid composition must penetrate into the adhesive layer to moisten the hydrophilic and hydrophobic adhesive components without over-wetting the adhesive surface of the label, which can compromise adhesive performance. In addition, the activating fluid composition needs to be compatible with mechanisms for applying activating fluids onto a liner-free label, such as in stand-alone systems, label printers, labeling lines, or other apparatuses. The activating fluid composition should also be safe, non-toxic and comply with the guidelines established by regulatory boards for their intended purpose.

The purpose of the activating fluid (or solution) is to introduce moisture into the adhesive layer to allow for the conversion of the adhesive from its non-tacky to tacky state. However, given the selection of both hydrophilic and hydrophobic adhesive materials, one must account for the chemistries of the two or more polymers and the solvent used in the deposition process for enabling optimal activation. As described previously, the activating fluid needs to penetrate into the hydrophilic regions of the adhesive layer to generate quick tack then redistribute and remain in the hydrophobic regions to maintain ultimate tack and long-term adhesion.

Upon contact with the adhesive layer, the activating fluid rapidly penetrate into the adhesive layer causing the hydrophilic regions to swell resulting in the generation of quick tack and increasing the surface area of the hydrophobic regions without causing the label to become slick and slide from the desired area of application. In one embodiment, the quick tack will result in average peel strength ranges of greater than 100 grams/inch within 5 minutes of application to a substrate, preferably an average peel strength of greater than 200 grams/inch within 2 minutes of application to a substrate, more preferably an average peel strength of greater than 200 grams/inch within 1 minute of application to a substrate. The activating fluid then distributes into the hydrophobic regions resulting in their swelling and ultimate adhesion to the substrate. This adhesion to the substrate results in average peel test values in the range from 100 grams/inch to 1,000 grams/inch, preferably from 200 grams/inch to 1,000 grams/inch, more preferably from 400 grams/inch to 1,000 grams/inch. The activating fluid then is removed from the hydrophilic regions either into the hygroscopic filler or by evaporation so that ultimate tack is not compromised by the presence of excess moisture in the label.

Suitable solvents include, but are not limited to, water; acetone; acetonitrile; lower alcohols (i.e., having from 1-10 carbons) including, but not limited to, methanol, ethanol, isopropyl alcohol, n-propanol, n-butanol, 2-butanol, isobutanol, 2-methy-2-butanol, n-pentanol, n-hexanol, 2-hexanol, cyclohexanol, n-heptanol, n-octanol, n-nonanol, n- decanol; glycols including, but not limited to, propylene glycol, ethylene glycol, and butylene glycol; fatty alcohols (i.e., having more than 10 carbons) including, but not limited to, undecanol, dodecanol, 1-tetradecanol, arachidyl alcohol, docosanol, tetracosanol, hexacosanol, octanosol, triacontanol, cetyl alcohol, stearyl alcohol, and polycosinol; ketones, such as methyl ethyl ketone; esters, such as lower (i.e., having from 1-10 carbons) acetates including, but not limited to, methyl acetate, ethyl acetate, n-propyl acetate, isopropyl acetate, isobutyl acetate, sec-Butyl acetate, tert-Butyl acetate, 3-methyl-1-butyl acetate; mineral spirits; oils, such as linseed oil and vegetable oil; citrus based solvents, such as limonene, other primary, secondary, and tertiary alcohols, and combinations thereof.

Low volatile solvents, such as ethylene glycol and propylene glycol, are particularly useful in extending the latency period.

Low surface energy solvents, such as isopropyl alcohol are particularly effective in increasing wet out on hydrophobic and/or low surface energy substrates.

The polymer selection for the adhesive formulation can be such that the activation solvent required to activate the label is water. However, selecting polymers that only require water to rapidly transition from non-tacky to active may not be desirable as the finished labels are highly vulnerable to blocking due to absorption of atmospheric moisture, causing a transition from the non-tacky state to the tacky state.

Therefore, in one embodiment, the activating fluid contains at least two or more solvents. The first solvent or component is water or an aqueous solution which allows for rapid wetting and swelling of the hydrophilic regions of the adhesive to generate the quick tack responsible for the initial adhesion of the label to the substrate. However, as the water is drawn into the hygroscopic filler, quick tack is lost and must be replaced by ultimate or long-term tack, derived from the hydrophobic regions, which exhibit some swelling behavior in water. Thus, a second solvent or component is a non-aqueous (non-water) solvent containing hydrophobic chemical moieties which enhances the activation of the hydrophobic regions by increasing the permeability of the activating fluid into these regions. In a particular embodiment, the non-aqueous solvent is partly miscible or fully miscible with water. By using a mixture of solvents, the swelling of the hydrophilic regions can increase the surface area of the hydrophobic regions exposed for solvent penetration, resulting in the more rapid generation of ultimate tack. An optional third solvent or component, which preferably is a volatile material, may be used to aid in the removal of excess moisture from the adhesive layer to promote stronger adhesion.

In one embodiment, the solvent contains between 5% and 20% of a non-toxic organic solvent in an aqueous solution. Care should be taken to match the polymer adhesive layer with suitable solvents that will activate the layer within the parameters discussed above. In a particular embodiment, the activation composition is a mixed solvent system with 1-50% w/w alcohol in water, preferably a 10% w/w mix of an alcohol in water. However, any polar solvent with some water miscibility containing hydrophobic chemical moieties may also be used.

The solvent system can be varied for a particular adhesive composition in order to vary the properties of the adhesive composition. For example, the examples below show that the activating solvent can be varied to correlate with the selected hydrophilic and/or hydrophobic materials to achieve the desired performance. Generally, a solvent is a liquid fluid that either solubilizes or swells polymeric components of a solvent sensitive film. A non-solvent is a liquid fluid that does not solubilize or swell the polymeric components of a solvent sensitive film. In one embodiment, non-solvent can be incorporated into the activation fluid to reduce the overall average peel adhesion of the label. In another embodiment solvent with a vapor pressure greater than that of water at a given temperature can be incorporated into the activation fluid to lower the amount of time required to achieve acceptable ultimate adhesion values.

To decrease surface tension, enhance solvent spreading on the adhesive film surface, and/or promote activating solvent penetration, surfactants may be added to the activating fluid. Surfactants may also help in the delivery of the activating fluid by allowing for the creation of finer mists with smaller particle sizes during atomization (when used to apply the activating fluid to the adhesive layer of a label) which can promote adhesive activation by increasing the surface area for the interaction between the activating solution and the adhesive layer. Classes of surfactants that can be used include anionic, cationic, non-ionic and amphoteric surfactants. Specific examples include lecithin, Span™-60, Span™-80, Span™-65, Tween™-20, Tween™-40, Tween™-60, Dynol™ 604 (Air Products), Surfynol™ (Air Products), Pluronics™ (BASF, Germany), Polysorbates™ (Tween™), Sodium dodecyl sulfate (sodium lauryl sulfate), Lauryl dimethyl amine oxide, Cetyltrimethylammonium bromide (CTAB), Polyethoxylated alcohols, Polyoxyethylene sorbitan, Octoxynol™ (Triton X100™), N, N-dimethyl-dodecylamine-N-oxide, Hexadecyl-trimethylammonium bromide (HTAB), Polyoxyl 10 lauryl ether, Brij™ 721™, Bile salts (sodium deoxycholate, sodium cholate), Polyoxyl castor oil (Cremophor™), Nonylphenol ethoxylate (Tergitol™), Cyclodextrins, Lecithin, or Methylbenzethonium chloride (Hyamine™).

### 1. Plasticizers

In one embodiment, the activating fluid further contains one or more plasticizers. Plasticizers can be used to improve long term adhesive bond strength, particularly to polymeric substrates, such as polyethylene, provided they exhibit good solvency and/or plasticization of the desired polymer adhesive layer. Plasticization can be described as the ability for a plasticizer to soften a polymer film. In some instances, an adequate measure of plasticizer response can be measured by the ability for a plasticizer to lower the glass transition point (Tg) of a desired polymer.

Suitable plasticizers include, but are not limited to, low to medium molecular weight polyols and diols including, but not limited to polyethylene glycol, propylene glycol, ethylene glycol, other alcohols including, but not limited to, fatty alcohols, adipates, phosphates, azelletes, citrates, butyl cellosolve, polyol polyethers, including, but not limited to propylene glycol monomethyl ethyl ether, dipropylene glycol methylethyl ether, dibasic esters, benzoates and related acids, carbonates, lactones, phthalates, other hydrocarbon based oils and other solvents that are non-volatile at standard temperature and pressure (STP). In one embodiment, the plasticizer is a polyol polyether, such as those available under the tradename PLASTITILT® and MACOL®. Compounds marketed as surfactants can also be used as a plasticizer provided they provide the desired properties of no-volatility at operating temperatures and exhibit good solvency and/or plasticization of desired polymer adhesive layer.

The concentration of the plasticizer or plasticizer(s) is typically from 1% to 50% by weight of the activation spray, preferably from 5% to 25% by weight of the activation spray. Solvents and surfactants can also be used to allow miscibility in aqueous solutions or emulsions. The use of plasticizers can provide quicker tack, particularly on polymeric substrates, and can extend open times from short term (less than 90 seconds to) to an indefinite amount of time significantly greater than 28 days.

### IV. Methods of making adhesive compositions

### A. Adhesive composition

The hydrophilic and hydrophobic polymers can be packaged individually, along with one or more solvents, and mixed together at a later time. Alternatively, the polymer can be mixed together to form a blend and dissolved or suspended in a solvent in the form of an emulsion, suspension, or solution.

As discussed above, the hydrophilic and hydrophobic polymers can be provided individually, or as a mixture, in the form of a solid, solution, or suspension. Prior to the preparation of the final adhesive composition, all formulations are diluted to the desired concentrations with distilled water or appropriate organic solvent.

The desired coating concentration of the formulations is between 25% and 55% solids (weight-to-volume). Depending on the particular combination of components in the adhesive compositions, the hydrophobic and hydrophilic adhesive components are mixed together in the appropriate ratios followed by addition of the other components. For example, if the hygroscopic particulate filler to be added is in the form of a colloidal suspension, the polymer mixture can be mixed into this suspension; if the hygroscopic agent is a solid, it can be added to the polymer mixture. In general, solutions are added in increasing order of viscosity followed by solids. To ensure the homogeneity of the final product, shear is introduced to the formulation.

### B. Barrier composition

The film-forming resin and optionally the discrete particles can be packaged individually, along with one or more solvents, and mixed together at a later time. Alternatively, the resin and particles can be mixed together to form a blend and suspended in a solvent in the form of an emulsion or suspension.

### V. Methods of using adhesive compositions

The final liner-free label is composed of an adhesive layer, a barrier layer, and a facestock *(i.e.* a label substrate). Application of the adhesive layer to the facestock and the barrier layer to the adhesive layer is part of the manufacturing process that influences the end adhesive performance.

### A. Facestocks (i.e. a label substrate)

Unlike other water and solvent activated labels and adhesive systems, the adhesive compositions described herein can be applied to a variety of facestocks. Suitable facestocks include paper, top-coated and non-top-coated grades of direct thermal paper, polymer films, woven and non-woven synthetic materials, wood, composite films, polymers, and mylar. In some embodiments, the facestock can be printed on with a suitable printing device. In other embodiments, the adhesive side of the label can receive dye/ink/pigment from a printing device, for example, printer registration marks.

### B. Substrates

The adhesive and barrier compositions described herein can be used to adhere coated labels to a variety of substrates. Suitable substrates include, but are not limited to, paper, cardboard, and metal, glass and plastics commonly used in commercial applications including, but not limited to, polyethylene terephthalate (PETE, PET, PETG), polyethylene (PE), polystyrene (PS), low- density polyethylene (LDPE), linear low-density polyethylene (LLDPE), high density polyethylene (HDPE), polypropylene (PP), polyvinyl chloride (PVC) and polyvinyl chloride films, and TYVEK®, as well as other low energy and thermoplastic substrates.

In some embodiments, the adhesives are designed to adhere to a single specific substrate but do not adhere to other substrates. In one embodiment, the adhesive can be designed to have a specific strength of adhesion and/or mode of failure. For example, for pharmacy bottles, the adhesive formulation can be designed to be clean-peel but have a high peel strength. This occurs when the adhesive bond between the facesheet and the substrate is the mode of failure of the label. More specifically, the adhesive bond has a lower failure point than the construct of the facesheet. In other embodiments, the adhesive is designed to adhere to a variety of substrates with little or no modification of the adhesive formulation.

The adhesive composition and/or barrier composition (or blend) can be applied to the above listed facestocks utilizing typical web coating methods including, but not limited to, knife of roll, gravure, reverse-gravure, metering rod, slot die, immersion coating, curtain coating, and air knife coating methods.

The coat weight of the adhesive composition on the facestock is largely dependent upon the end use application of the solvent sensitive adhesive label. Typically, the coat weight of the barrier layer is from 0.5 g/m² to 25 g/m², preferably the coat weight is from 1 g/m² to 10 g/m², and the most preferred range is from 2 g/m² to 5 g/m². In other embodiments, the thickness of the adhesive layer is from 5 microns to less than 25 microns, preferably from 10 microns to 20 microns.

After the application of the adhesive composition and barrier composition to the facestock web, the remaining water and solvent is extracted from the adhesive and/or barrier composition. This may be accomplished using conventional methods including, but not limited to, air flotation oven, web over rollers oven, energy cure methods, and the like. In one embodiment, the adhesive layer is dried prior to the application of the barrier layer. Alternatively, the adhesive composition and/or barrier composition can be designed such that the polymer, copolymers, or particulate materials in the adhesive and/or barrier composition trap excess polymer solvent and/or activation spray, such that the vapor pressure of the combined system (polymer(s) + spray) is less than that of the spray alone. This allows any overspray that did not make contact with the label to evaporate, yet keeps the label tacky indefinitely. In one embodiment, this can be accomplished by incorporating inorganic salts as particulate filler into the adhesive and/or barrier formulation.

Optionally, it may be desirable to coat thermally activated paper and films. Care must be taken in adhesive and/or barrier selection to ensure that the components formulating the adhesive and/or barrier composition do not contain certain chemistries or solvents that negatively interact with the embedded thermal dye. In addition, during the drying (or solvent removal) process, the heat or energy from the process should not activate the thermal paper (a processes known as imaging).

Sometimes the coating of a web with an adhesive and/or barrier can induce a phenomenon known as a shape memory or curling. As it is often important for end applications that labels have lay flat properties, a number of additives can be added to the adhesive formulation to prevent curl, as described earlier. In addition, mechanical methods can be employed to reduce curl. Also, the addition of vaporized water (or other liquid vapors) to the non-adhesive coated side of the label can have dramatic effects in reducing curl.

### C. Coated labels

In one embodiment, the final product is a label having four layers: a first layer which is printable upon such as by a typical label printer (i.e. a direct thermal printer), second layer of facestock material *(i.e.* a label substrate), a third layer of adhesive composition described herein, e.g., coated on one surface of the facestock, such as a film composed of a blend of hydrophobic and hydrophilic polymers containing a dispersion of hygroscopic particulate filler and other additives, and a barrier layer containing a non-tacky, film-forming resin, and optionally discrete particles containing a hydrophobic material.

In the case of the adhesive composition, preferably, there is a continuous phase composed of a homogenous mix of all adhesive polymers with a uniform dispersion of the filler. Alternatively, there is phase separation of the polymers resulting in a film composed of two phases, one rich in the hydrophilic polymer and one rich in the hydrophobic polymer; this can occur in two different ways, one with a continuous phase of the hydrophobic polymer with regions of hydrophilic polymer or vice versa. In these embodiriments, the filler is dispersed uniformly in both phases or preferentially localized to one of the polymer-rich phases. In some embodiments, the filler particles are localized to the surface of the film; in others, they are localized to the interface between the paper and the adhesive or distributed uniformly in the z- axis. In all embodiments, the adhesive portion of the liner-free label is in a non-tacky state prior to activation by the activating solution.

In the case of the barrier composition, when the barrier composition contains only one or more film-forming resins, the resin(s) are typically dissolved or suspended in a solvent or solvents and applied to the adhesive layer. In those embodiments where the barrier composition contains one or more film-forming resins and discrete particles, the discrete particles are typically uniformly suspended in a solution of the one or more film-forming resins and the mixture is applied to the adhesive layer.

The labels can also be designed to indicate product tampering. In one embodiment, the labels can be designed to leave a residue, such as part of the label, if the label is removed from the packaging/container. For example, labels can be applied to a container containing pharmaceutical products. If someone attempts to remove the label, the residue from the label remains on the container indicating that the original label has been removed. This may be useful if the label is applied to the container such that if the container is opened, the label is compromised and leaves a residue behind.

### Examples

### Example 1. Barrier formulations

Barrier formulations having the following compositions were prepared:

**BL#1**

| Total solids in solution of BL#1 were made up to 10%wt in water. | |
|---|---|
| **Component** | **%wt Solids Dry Film** |
| Celvol 502 | 100 |

**BL#2**

| Total solids in solution of BL#2 were made up to 10.5%wt in water. | |
|---|---|
| **Component** | **%wt Solids Dry Film** |
| Celvol 502 | 95 |
| MBX-8 (PMMA, 8um) | 5 |

**BL#3**

| Total solids in solution of BL#3 were made up to 10.5%wt in water. | |
|---|---|
| **Component** | **%wf Solids Dry Film** |
| Celvol 502 | 95 |
| Snowtex-UP (elongated silica, 40nmx300nm) | 5 |

**BL#4**

| Total solids in solution of BL#4 were made up to 40%wt in water. | |
|---|---|
| **Component** | **%wt Solids Dry Film** |
| Hydrocerf 9174 | 90 |
| Celvol 502 | 10 |

**BL#5**

| Total solids in solution of BL#5 were made up to 40%wt in water. | |
|---|---|
| **Component** | **%wt Solids Dry Film** |
| Hydrocerf 9174 | 90 |
| Joncryl ECO2124 | 10 |

### Example 2. Adhesive formulations

Adhesive formulations having the following compositions were prepared:

**AL#1**

| Total solids in solution of AL#1 were made up to 40%wt in water. | |
|---|---|
| **Component** | **%wt Solids Dry Film** |
| Joncryl 2641 | 59 |
| Bayhydrol AHXP 2754 | 10 |
| Acronal V210 | 11 |
| Adura 100 | 20 |

**AL#2**

| Total solids in solution of AL#2 were made up to 51%wt in water. | |
|---|---|
| **Component** | **%wt Solids Dry Film** |
| Joncryl ECO2124 | 10 |
| PVP/VA W-735 | 30 |
| Robond PS-7440 | 60 |

**AL#3**

| Total solids in solution of AL#3 were made up to 52%wt in water. | |
|---|---|
| **Component** | **%wt Solids Dry Film** |
| PVPNA W-735 | 30 |
| Robond PS-7440 | 70 |

### Example 3. Multilayer adhesive compositions

AL#1 was applied to the uncoated side (backside) of thermal paper stock with a #18 wire wound bar to yield a calculated dry film weight of 17.4 g/m². The coated label precursor was dried in a 100°F oven for 2 min.

AL#2 was applied to the uncoated side (backside) of thermal paper stock with a #24 wire wound bar to yield a calculated dry film weight of 29.7 g/m². The coated label precursor was dried in a 100°F oven for 2 min.

AL#3 was applied to the uncoated side (backside) of thermal paper stock with a #24 wire wound bar to yield a calculated dry film weight of 30.2 g/m². The coated label precursor was dried in a 100°F oven for 2 min.

The various barrier layers were applied to the various adhesive layers as shown in Table 1. BL#1-BL#3 were applied to the adhesive layer with a #14 wire wound bar to yield a calculated dry film weight of 3.4 g/m² (BL#1), 3.6 g/m² (BL#2), and 3.6 g/m² (BL#3), respectively. BL#4 and BL#5 were applied to the adhesive layer with a #5 wire wound bar to yield a calculated dry film weight of 4.9 g/m² (BL#4 and BL#5). The multilayer liner-free labels were dried in a 100°F oven for 2 mins.

### Blocking test

Thermal paper coated sample strips sized 1.5" by 6" were placed in a Precision Bench Heatseal Press (Packworld USA, Nazareth, PA) with the adhesive layer oriented down on top of another sample strip of equal size. The samples were treated for 90 sec, at 120°F and 60psi. After testing, the cooled samples were peeled apart. Samples were rated on a scale of 1 to 5. Samples with no visible transfer received a rating of 1.0 (best) while samples with the greatest amount of transfer received a rating of 5.0 (fail). The results are shown in Table 1.

### Adhesive peel test

The adhesive side of coated samples, sized 1" by 6", were sprayed with approximately 8 mg/in² of activation spray. Activated samples were immediately placed, adhesive side down, on a polyethylene substrate. The sample was allowed to sit undisturbed for 20 min after which time the sample strip was peeled from the polyethylene surface. Samples were rated on a scale from 1 to 5. If the sample showed no adhesion to the substrate, the sample received a rating of 1.0 (fail). If the sample experienced tearing or facestock delamination, a rating of 5.0 (best) was achieved.

There was a significant reduction in the level of blocking when the barrier layer was applied to the adhesive layer as shown in Examples E1 -

E7, as compared to the high level of blocking observed with the adhesive layer alone as shown in Comparative Examples C1 - C3. While the adhesive peel test ratings of the Comparative Examples C1 - C3 were high, the adhesive properties were not hindered by the application of the barrier layer Examples E1 - E7. The highest peel test ratings were achieved when particles with low surface energy were used, as in Examples E4, E6, and E7.

**Table 1. Results**

| **Examples and Comparative Examples** | **AL** | **BL** | **Blocking Rating** | **Peel Test Rating** | **Activating Spray** |
|---|---|---|---|---|---|
| E1 | 1 | 1 | 1.1 | 3.5 (1.5 after 24 hr) | 70% IPA |
| E2 | 1 | 2 | 1.2 | 3.0 | 70% IPA |
| E3 | 1 | 3 | 1.2 | 3.5 | 70% IPA |
| E4 | 2 | 4 | 1.0 | 4.0 | 70% IPA |
| E5 | 2 | 5 | 1.0 | 3.5 | 70% IPA |
| E6 | 3 | 4 | 1.1 | 4.0 | 70% IPA |
| E7 | 3 | 5 | 1.1 | 4.5 | 70% IPA |
| C1 | 1 | --- | 4.5 | 4.5 (4.5 after 24 hr) | 70% IPA |
| C2 | 2 | --- | 2.5 | 5.0 | 70% IPA |
| C3 | 3 | --- | 2.5 | 4.5 | 70% IPA |

### Example 4. Multilayer adhesive compositions

### Embodiment 1

A multilayer composition was prepared containing an adhesive layer containing UCAR 9291 and a barrier layer containing Uni-Rez 2215 dissolved in isopropyl alcohol.

### Embodiment 2

A alternative multilayer composition was prepared containing an adhesive layer containing Joncryl 2641, Bayhydrol AHXP2754, Acronal V210 and Adura 100 and a barrier layer containing Uni-Rez 2215 dissolved in isopropyl alcohol having dispersed therein 10%wt solids polystyrene dispersion in water. The polystyrene particle size was 4 um.

The first experiment for the two-layer approach used a homogenous barrier coating mixture as described in Embodiment 1. There was a significant improvement in blocking results. Block Tester values decreased from 5.0(heavy blocking) to 1.3 (light blocking). The first experiment for Embodiment 2 using a heterogenous barrier layer coating mixture, also resulted in a significant improvement in blocking. Block Tester values decreased from 2.5 (moderate blocking) without a barrier layer to 1.5 (light blocking) with barrier layer applied.

As testing with homogenous barrier layers continued, it was found that using a film forming binder component in common with the adhesive and applied at a high solids level in solution (>40%) provided the best blocking results, as well as the best adhesive peel test results (Peel Tester 10 min and 24 hr). Other materials, such as polyvinyl alcohol (Celvol 502) worked to reduce blocking values significantly but adhesive results were poor, especially after long term holding. The barrier layer film coat weight coverage ranged from 0.8 to 20 g/m², most preferably 1.0 to 5.0 g/m².

As testing with the heterogeneous barrier layers proceeded, the most effective particles found were those with low surface energy, such as PTFE. The best mode of practice was found to be when the particles were blended with a film forming binder resin. Binder resins in common with the adhesive coat resins were most effective. A concentration of 5-30%wt solids of the binder resin in the barrier coating was optimal, with 5-20%wt solids of binder resin most preferred. The discrete particles made up the balance of the solids. The most preferred barrier coating solution solids level was 35-100%wt, with 40-60%wt solids most preferred. Barrier layer film coat weight coverage range from 0.8 to 20 g/m², most preferred 2 to 10 g/m².

## Claims

1. A fluid-activatable liner-free label comprising a label substrate, an adhesive layer and a barrier layer, wherein the adhesive layer is on top of the label substrate and the barrier layer is on top of the adhesive layer.

2. The label of claim 1, wherein the label substrate is selected from the group consisting of paper, polymers, and combinations thereof.

3. The label of claim 2, wherein the polymers are selected from the group consisting of polyethylene terephthalate (PETE, PET, PETG), polyethylene (PE), polystyrene (PS), low-density polyethylene (LDPE), linear low-density polyethylene (LLDPE), high density polyethylene (HDPE), polypropylene (PP), and combinations thereof.

4. The label of claim 1, wherein the barrier layer is homogeneous and comprises non-tacky, film-forming polymers or resins or heterogeneous and comprises non-tacky, film-forming polymers or resins and discrete particles of a hydrophobic material.

5. The label of claim 4, wherein the particles have a diameter from 10 nm to 50 µm, as measured by laser diffraction, dynamic light scattering or sieving.

6. The label of claim 5, wherein the particles have a diameter from 1 µm to 25 µm, as measured by laser diffraction, dynamic light scattering or sieving.

7. The label of claim 4, wherein the hydrophobic material is selected from the group consisting of polystyrene, polymethylmethacrylate, polyethylene, polytetrafluoroethylene, perfluoroalkoxy polymers, fluorinated ethylene propylene polymers, polyamide, colloidal silica, and combinations thereof.

8. The label of any one of claims 4-7, wherein the non-tacky film forming resin is selected from the group consisting of polyvinyl alcohol,
polyvinyl acetate, polystyrene acrylates, polyvinyl pyrrolidone, cellulose derivatives, polyacrylic acids, and combinations thereof.

9. The label of any one of claims 1-8, wherein the adhesive layer comprises at least two polymeric materials with different hydrophilicities, which are activated by an activating fluid comprising one or more solvents, wherein the more hydrophilic materials provide quick tack when exposed to the activating fluid and the more hydrophobic polymer provides ultimate adhesion when exposed to the activating fluid.

10. The label of claim 9, wherein the more hydrophilic polymer is selected from the group consisting of polyvinyl alcohols, polyvinyl acetates, polyvinylpyrrolidones, polyvinylpyrrolidone-vinyl acetate copolymers, polyacrylic acids, polyacrylates, polyethylene glycols, poly(2-ethyl-2-oxazoline), polyacrylamide copolymers, ethylene vinyl acetates, cellulose derivatives, ureas, gelatins, alginates, agars, gum arabics, and combinations thereof.

11. The label of claim 9, wherein the concentration of the more hydrophilic material(s) is from 10% to 50% by weight of the adhesive composition in a dry state.

12. The label of claim 9, wherein the more hydrophobic polymer is selected from the group consisting of natural and reclaimed rubbers, polyurethanes, non-carboxylated and carboxylated styrene-butadiene rubbers, polyacrylics, polyamides, polyesters, polyolefins, polystyrenes, polyvinyl esters, polyvinyl ketones, polydiene elastomers, polyisobutylenes, and combinations thereof.

13. The label of claim 12, wherein the more hydrophobic polymer is polystyrene acrylic copolymer.

14. The label of claim 9, wherein the concentration of the more hydrophobic material(s) is from 40% to 80% by weight of the dry film.

15. The label of claim 9, wherein the adhesive layer further comprises a hygroscopic particulate filler.

16. The label of claim 15, wherein the hygroscopic particulate filler is selected from the group consisting of alumina, alumina gel, boehmite, pseudoboehmite, clay, calcium carbonate, chalk, magnesium carbonate, kaolin, calcined clay, pyropylate, bentonite, zeolite, talc, silica, silica gel, synthetic aluminum silicates, synthetic calcium silicates, diatomaceous earth, anhydrous silicic acid powder, aluminum hydroxide, barite, barium sulfate, gypsum, calcium sulfate, and organic particles, non-woven microfibers and combinations thereof; or,
wherein the concentration of the hygroscopic particulate filler is from 1% to 25% by weight of the dry film.

17. The label of claim 1, wherein when the label is contacted by an activating fluid, the activating fluid penetrates into the adhesive layer causing the adhesive layer to become tacky.

## Patentansprüche

1. Fluidaktivierbares trägerfreies Etikett, umfassend ein Etikettsubstrat, eine Haftmittelschicht und eine Sperrschicht, wobei die Haftmittelschicht auf dem Etikettsubstrat aufliegt und die Sperrschicht auf der Haftmittelschicht aufliegt.

2. Etikett nach Anspruch 1, wobei das Etikettsubstrat ausgewählt ist aus der Gruppe bestehend aus Papier, Polymeren und Kombinationen daraus.

3. Etikett nach Anspruch 2, wobei die Polymere ausgewählt sind aus der Gruppe bestehend aus Polyethylenterephthalat (PETE, PET, PETG), Polyethylen (PE), Polystyrol (PS), Polyethylen niederer Dichte (LDPE), linearem Polyethylen niederer Dichte (LLDPE), Polyethylen hoher Dichte (HDPE), Polypropylen (PP) und Kombinationen daraus.

4. Etikett nach Anspruch 1, wobei die Sperrschicht homogen ist und nicht klebrige, einen Film ausbildende Polymere oder Harze umfasst oder heterogen ist und nicht klebrige, einen Film ausbildende Polymere oder Harze und diskrete Partikel eines hydrophoben Materials umfasst.

5. Etikett nach Anspruch 4, wobei die Partikel einen Durchmesser von 10 nm bis 50 µm aufweisen, gemessen mit Laserbeugung, dynamischer Lichtstreuung oder Sieben.

6. Etikett nach Anspruch 5, wobei die Partikel einen Durchmesser von 1 µm bis 25 µm aufweisen, gemessen mit Laserbeugung, dynamischer Lichtstreuung oder Sieben.

7. Etikett nach Anspruch 4, wobei das hydrophobe Material ausgewählt ist aus der Gruppe bestehend aus Polystyrol, Polymethylmethacrylat, Polyethylen, Polytetrafluorethylen, Perfluoralkoxypolymeren, fluorierten Ethylenpropylen-Polymeren, Polyamid, Kieselsol und Kombinationen daraus.

8. Etikett nach einem der Ansprüche 4-7, wobei das nicht klebrige, einen Film ausbildende Harz ausgewählt ist aus der Gruppe bestehend aus Polyvinylalkohol, Polyvinylacetat, Polystyrolacrylaten, Polyvinylpyrrolidon, Cellulosederivaten, Polyacrylsäuren und Kombinationen daraus.

9. Etikett nach einem der Ansprüche 1-8, wobei die Haftmittelschicht wenigstens zwei Polymermaterialien mit verschiedenen Hydrophilizitäten umfasst, die durch ein Aktivierungsfluid, welches ein oder mehrere Lösungsmittel umfasst, aktiviert werden, wobei die stärker hydrophilen Materialien eine rasche Haftung bereitstellen, wenn dem Aktivierungsfluid ausgesetzt, und das stärker hydrophobe Polymer eine stärkste Haftung bereitstellt, wenn dem Aktivierungsfluid ausgesetzt.

10. Etikett nach Anspruch 9, wobei das stärker hydrophile Polymer ausgewählt ist aus der Gruppe bestehend aus Polyvinylalkoholen, Polyvinylacetaten, Polyvinylpyrrolidonen, Polyvinylpyrrolidon-Vinylacetat-Copolymeren, Polyacrylsäuren, Polyacrylaten, Polyethylenglycolen, Poly(2-ethyl-2-oxazolin), Polyacrylamid-Copolymeren, Ethylenvinylacetaten, Cellulosederivaten, Harnstoffen, Gelatinen, Alginaten, Agaren, Gummiarabikumarten und Kombinationen daraus.

11. Etikett nach Anspruch 9, wobei die Konzentration des/der stärker hydrophilen Materials/Materialien von 10 Gew.-% bis zu 50 Gew.-% der Haftmittelzusammensetzung in einem trockenen Zustand ausmacht.

12. Etikett nach Anspruch 9, wobei das stärker hydrophobe Polymer ausgewählt ist aus der Gruppe bestehend aus Naturkautschuk und Kautschukregenerat, Polyurethanen, nichtcarboxylierten und carboxylierten Styrol-Butadien-Kautschukarten, Polyacrylen, Polyamiden, Polyestern, Polyolefinen, Polystyrolen, Polyvinylestern, Polyvinylketonen, Polydienelastomeren, Polyisobutylenen und Kombinationen daraus.

13. Etikett nach Anspruch 12, wobei das stärker hydrophobe Polymer ein Polystyrol-Acryl-Copolymer ist.

14. Etikett nach Anspruch 9, wobei die Konzentration des/der stärker hydrophoben Materials/Materialien von 40 Gew.-% bis zu 80 Gew.-% des trockenen Films ausmacht.

15. Etikett nach Anspruch 9, wobei die Haftmittelschicht ferner einen hygroskopischen Partikelfüller umfasst.

16. Etikett nach Anspruch 15, wobei der hygroskopische Partikelfüller ausgewählt ist aus der Gruppe bestehend aus Aluminiumoxid, Aluminiumoxidgel, Böhmit, Pseudoböhmit, Ton, Calciumcarbonat, Kreide, Magnesiumcarbonat, Kaolin, calciniertem Ton, Pyropylat, Bentonit, Zeolith, Talk, Siliciumdioxid, Kieselgel, synthetischen Aluminiumsilicaten, synthetischen Calciumsilicaten, Kieselgur, wasserfreiem Kieselsäurepulver, Aluminiumhydroxid, Baryt, Bariumsulfat, Gips, Calciumsulfat sowie organischen Partikeln, Vlies-Mikrofasern und Kombinationen daraus; oder,
wobei die Konzentration des hygroskopischen Partikelfüllers von 1 Gew.-% bis 25 Gew.-% des trockenen Films ausmacht.

17. Etikett nach Anspruch 1, wobei, wenn das Etikett mit einem Aktivierungsfluid in Berührung gebracht wird, das Aktivierungsfluid in die Haftmittelschicht eindringt und bewirkt, dass die Haftmittelschicht klebrig wird.

## Revendications

1. Étiquette dépourvue de doublure activable par fluide comprenant un substrat d'étiquette, une couche adhésive et une couche barrière, dans laquelle la couche adhésive est au-dessus du substrat d'étiquette et la couche barrière est au-dessus de la couche adhésive.

2. Étiquette selon la revendication 1, dans laquelle le substrat d'étiquette est choisi dans le groupe constitué par le papier, les polymères et leurs combinaisons.

3. Étiquette selon la revendication 2, dans laquelle les polymères sont choisis dans le groupe constitué par le poly(téréphtalate d'éthylène) (PETE, PET, PETG), le poly(éthylène) (PE), le poly(styrène) (PS), le poly(éthylène) basse densité (PEBD), le poly(éthylène) basse densité linéaire (PEBDL), le poly(éthylène) haute densité (PEHD), le poly(propylène) (PP) et leurs combinaisons.

4. Étiquette selon la revendication 1, dans laquelle la couche barrière est homogène et comprend des polymères ou résines filmogènes non poisseux ou hétérogènes et comprend des polymères ou résines filmogènes non poisseux et des particules discrètes d'un matériau hydrophobe.

5. Étiquette selon la revendication 4, dans laquelle les particules ont un diamètre de 10 nm à 50 µm, tel que mesuré par diffraction laser, diffusion de lumière dynamique ou tamisage.

6. Étiquette selon la revendication 5, dans laquelle les particules ont un diamètre de 1 µm à 25 µm, tel que mesuré par diffraction laser, diffusion de lumière dynamique ou tamisage.

7. Étiquette selon la revendication 4, dans laquelle le matériau hydrophobe est choisi dans le groupe constitué par le poly(styrène), le poly(méthacrylate de méthyle), le poly(éthylène), le poly(tétrafluoroéthylène), les polymères perfluoroalcoxy, les polymères d'éthylène propylène fluorés, le poly(amide), la silice colloïdale et leurs combinaisons.

8. Étiquette selon l'une quelconque des revendications 4 à 7, dans laquelle la résine filmogène non poisseuse est choisie dans le groupe constitué par le poly(alcool vinylique), le poly(acétate de vinyle), les poly(acrylates de styrène), la poly(vinylpyrrolidone), les dérivés de cellulose, les poly(acides acryliques) et leurs combinaisons.

9. Étiquette selon l'une quelconque des revendications 1 à 8, dans laquelle la couche adhésive comprend au moins deux matériaux polymériques ayant une hydrophilie différente, qui sont activés par un fluide d'activation comprenant un ou plusieurs solvants, dans laquelle les plusieurs matériaux hydrophiles confèrent une pégosité rapide lorsqu'ils sont exposés au fluide d'activation et les plusieurs polymères hydrophobes confèrent une adhérence ultime lorsqu'ils sont exposés au fluide d'activation.

10. Étiquette selon la revendication 9, dans laquelle les plusieurs polymères hydrophiles sont choisis dans le groupe constitué par les poly(alcools vinyliques), les poly(acétates de vinyle), les poly(vinylpyrrolidones), les copolymères de poly(vinylpyrrolidone-acétate de vinyle), les poly(acides acryliques), les poly(acrylates), les poly(éthylène glycols), la poly(2-éthyl-2-oxazoline), les copolymères de poly(acrylamide), les acétates d'éthylène vinyle, les dérivés de cellulose, les urées, les gélatines, les alginates, les agars-agars, les gommes arabiques et leurs combinaisons.

11. Étiquette selon la revendication 9, dans laquelle la concentration des plusieurs matériaux hydrophiles est de 10 % à 50 % en poids de la composition adhésive dans un état sec.

12. Étiquette selon la revendication 9, dans laquelle les plusieurs polymères hydrophiles sont choisis dans le groupe constitué par les caoutchoucs naturels et recyclés, les poly(uréthanes), les caoutchoucs de styrène-butadiène non carboxylés et carboxylés, les poly(acryliques), les poly(amides), les poly(esters), les poly(oléfines), les poly(styrènes), les poly(esters de vinyle), les poly(vinylcétones), les élastomères de poly(diène), les poly(isobutylènes) et leurs combinaisons.

13. Étiquette selon la revendication 12, dans laquelle les plusieurs polymères hydrophobes sont un copolymère de poly(styrène acrylique).

14. Étiquette selon la revendication 9, dans laquelle la concentration des plusieurs matériaux hydrophobes est de 40 % à 80 % en poids du film sec.

15. Étiquette selon la revendication 9, dans laquelle la couche adhésive comprend en outre une charge particulaire hygroscopique.

16. Étiquette selon la revendication 15, dans laquelle la charge particulaire hygroscopique est choisie dans le groupe constitué par l'alumine, le gel d'alumine, la boehmite, la pseudo-boehmite, l'argile, le carbonate de calcium, la craie, le carbonate de magnésium, le kaolin, l'argile calcinée, le pyropylate, la bentonite, la zéolite, le talc, la silice, le gel de silice, les silicates d'aluminium synthétiques, les silicates de calcium synthétiques, la terre de diatomée, la poudre d'acide silicique anhydre, l'hydroxyde d'aluminium, la baryte, le sulfate de baryum, le gypse, le sulfate de calcium, les particules organiques, les microfibres non tissées et leurs combinaisons ; ou
dans laquelle la concentration de la charge particulaire hygroscopique est de 1 % à 25 % en poids du film sec.

17. Étiquette selon la revendication 1, dans laquelle lorsque l'étiquette est mise en contact avec un fluide d'activation, le fluide d'activation pénètre la couche adhésive, amenant la couche adhésive à devenir poisseuse.
